# EUROPEAN PATENT SPECIFICATION

(11) **EP 0 900 468 B1**
(45) Date of publication and mention of the grant of the patent: **15.05.2002**
(21) Application number: 98903238.8
(22) Date of filing: 27.02.1998
(51) Int. Cl.: H02M 3/04

(54) **A CONVERTOR, A POWER SUPPLY, AND A BATTERY CHARGER**
WANDLER, NETZTEIL UND BATTERIELADEGERÄT
CONVERTISSEUR, ALIMENTATION ET CHARGEUR DE BATTERIE

(30) Priority: 12.03.1997 EP 97400546
(43) Date of publication of application: 10.03.1999
(73) Proprietor: Koninklijke Philips Electronics N.V., 5621 BA Eindhoven (NL)
(72) Inventor: VAN LERBERGHE, Steven, Jan, Willem, NL-5656 AA Eindhoven (NL)
(74) Representative: Deguelle, Wilhelmus Hendrikus Gerardus
(86) International application number: IB9800253
(87) International publication number: WO9840961

(56) References cited:
- EP-A- 0 099 596
- EP-A- 0 396 125
- DE-A- 4 118 918

## Description

The present invention relates to a convertor having an input and a load output, the convertor comprising a resonant transducer means provided with a transducer input and a transducer output coupled to the load output, an output rectifier circuit coupled to the load output, and a controllable transducer control means coupled between the input of the convertor and the transducer input, the transducer control means being provided with a control input coupled to the resonant transducer means for inputting a control signal containing a measure of the resonance frequency of the resonant transducer means.

The present invention also relates to a power supply and a battery charger which are provided with a convertor.

Such a convertor is known from EP-A-0 099 596. DE-C-33 00 669 discloses a convertor applied in a DC current power supply. This known convertor comprises a resonant transducer means in the form of a resonant piezo-electric transformer whose input impedance is connected to a transducer control means in the form of a self-oscillating pulse providing means which provides pulses at a pulse rate which is equal to the resonant frequency of the resonant transducer means. An input convertor AC voltage is rectified and stabilised and then fed to the resonant transducer means through the self-oscillating pulse providing means. The transducer output of the resonant transducer means is connected to the output rectifier circuit and a voltage stabiliser circuit to provide a high performance output power at the load output of the convertor which is virtually independent of the open or short circuit state of the load. In particular, the known convertor provides an alternately operated parallel arrangement of two piezo-electric transducer means for enhancing the availability of the output power on the load means. A disadvantage of this known convertor is that its flexibility in terms of variability and arrangement of the convertor as a whole and the output rectifier circuit in particular is limited.

Therefore, it is an object of the present invention to provide a convertor whose embodiment and properties can be easily adapted to a practically required range of applications.

To achieve this, the convertor according to the invention is characterised in that the output rectifier circuit comprises one or more current doublers having a control output coupled to the control input of the transducer control means.The convertor according to the invention has the advantage that by using controllable transducer control means, the stability and the statistical spread of the properties of the convertor are enhanced because they are no longer largely dependent on the input impedance of the piezo-electric transducer means, which input impedance shows a great statistical spread in practice. Furthermore, it is determined that variations which are important in practical applications of the convertor according to the invention are very easy to implement In particular, the convertor according to the invention can be easily made suitable, in a variety of possible embodiments, for application, for example, in a fast battery charger.

These and other aspects of the invention will be apparent from and elucidated with reference to the embodiments described hereinafter.

In the drawings:
Fig. 1 shows a first embodiment of the convertor according to the invention,
Fig. 2 shows a general outline of the convertor of fig. 1 applied in a battery charger of a power supply,
Fig. 3 shows a second embodiment of the convertor of figs 1 and 2,
Figs. 4, 5, 6 and 7 show possible embodiments of an output rectifier circuit for application in the convertor of figs 1 and 2,
Fig. 8 shows interrelated diagrams of voltages and voltage ratios applying to the embodiment of fig 6,
Figs. 9, 10, and 11 show further possible embodiments of relevant parts of the convertor according to the invention, and
Fig. 12 shows an equivalent circuit of a piezo electric transducer.

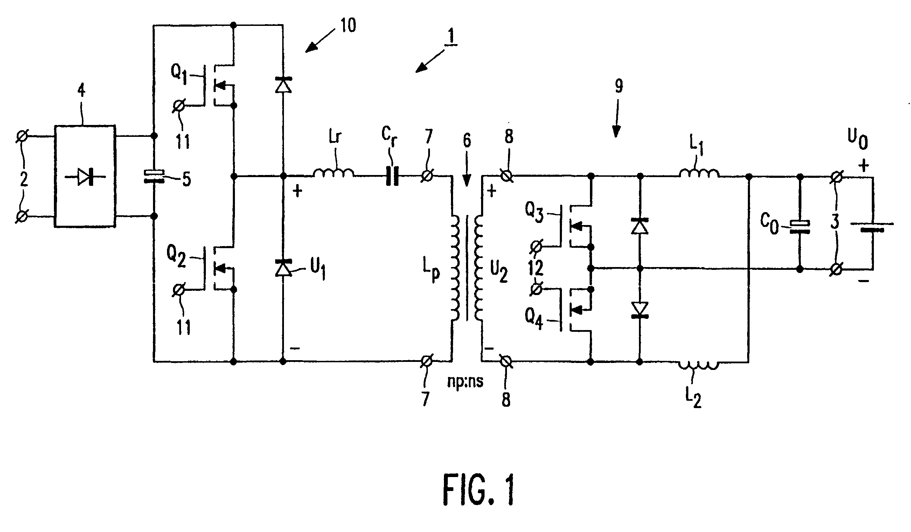

Fig. 1 shows an outline of a first embodiment of a convertor 1. The convertor 1 has an input 2 and a load output 3. The convertor 1 comprises an input rectifier circuit 4, whereto a voltage stabilising capacitor 5 is connected. The convertor 1 further comprises a resonant transducer means 6 provided with a transducer input 7 and a transducer output 8 coupled to the load output 3 by means of an output rectifier circuit 9. A transducer control means 10 included in the convertor 1 is coupled between the input 2 of the convertor and the transducer input 7. The transducer control means 10 is controllable via a control input 11, which is connected to a series arrangement of current doublers Q1 and Q2, which are also referred to as current mirrors. The output rectifier circuit 9 can supply a control signal to a control input/output 12 thereof and comprises a parallel arrangement of current doublers Q3 and Q4. The various diodes connected in parallel to Q1, Q2, Q3 and Q4 only allow substantial voltages to be present across these diodes if the diodes do not conduct current. The output rectifier circuit 9 is connected through a smoothing coil pair L1 and L2 to a stabilising capacitor C0 connected to the load output 3 of the convertor 1. The convertor comprises an LC circuit Lr, Cr coupled between the transducer control means 10 and the resonant transducer means 6.

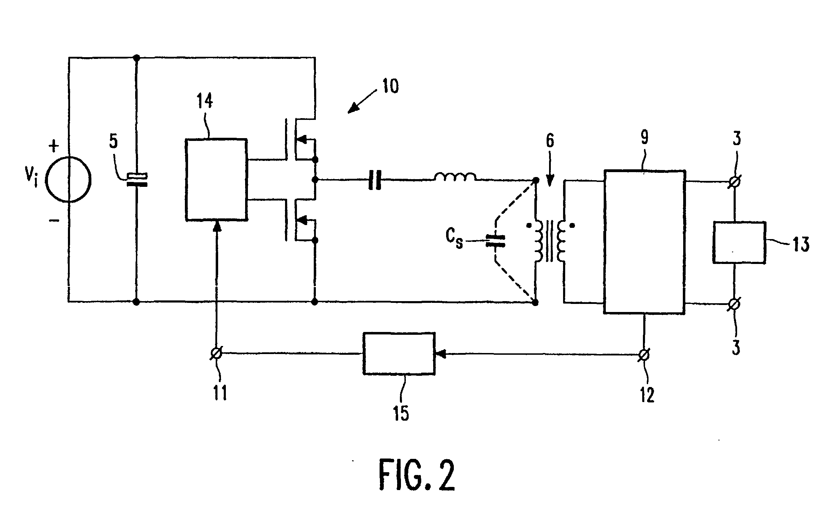

Fig. 2 shows a possible loop configuration in a general outline of the convertor 1 applied in a battery charger, wherein a battery 13 is connected to the load output 3. Apart from a driver 14, a loop filter 15 is connected between control output 12 and control input 11. An alternative to the LC circuit is shown wherein an additional capacitor Cs is connected in parallel to the resonant transducer means.

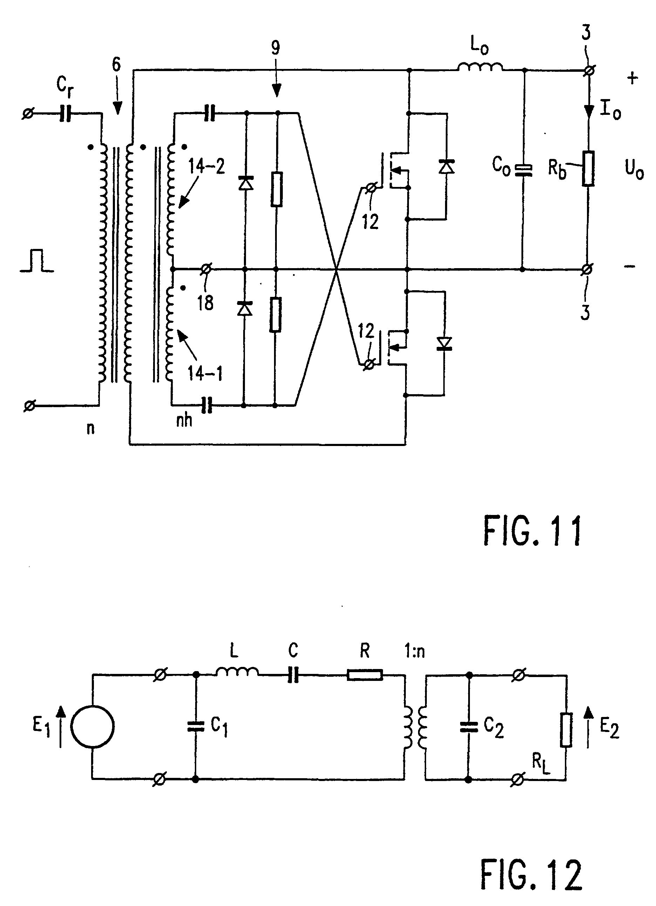

In general, the resonant transducer means may be embodied as a resonant miniature transformer means 6, such as a well-known planar transformer realized by lithographic patterning for example, on a multilayer printed circuit board, also known as a switched mode power supply, but a piezo-electric transducer can be applied as well. A piezo-electric transducer or piezo coupler is used in DE-C-33 00 669 mentioned hereinabove. For the sake of completeness, an equivalent circuit for such a piezo-electric transducer which can suitably be incorporated in any of the embodiments described herein, is shown in figure 12.

The operation of the convertor 1 is such that after rectifying and stabilising an AC signal on input 2, control input 11 is controlled such that in a resonant rate ranging mostly between 50 KHz and 250 KHz, a mainly pulse shaped signal is applied to the resonant transducer means 6 and that the pulse shaped signal on transducer output 8 is again rectified by the active output rectifier circuit 9 and then DC stabilised and fed to the load, which can be any device capable of receiving the output power provided, such as a capacitor or the battery 13. As the convertor 1 is capable of outputting large amounts of current, the load could also be constructed as a high power or high current load, such as a high power capacitor or a traction battery. In such an application of the convertor 1, safety means could be limited to a minimum, while the volume occupied by said converter is also limited to a minimum.

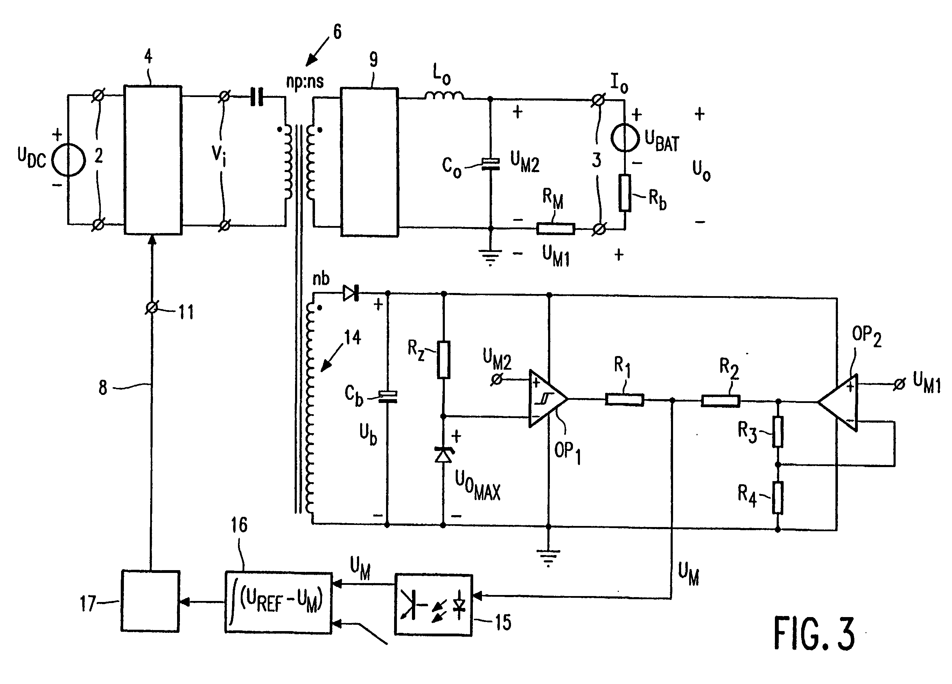

Fig. 3 shows a rather detailed connection scheme wherein the control signal on input 11 is derived from the resonant transducer means 6 by means of an additional transducer coupling 14 therein. After some basic thresholding executed by means of operational amplifiers OP1 and OP2, optocoupling in optocoupler 15 for optimal isolation between input 2 and output 3, integration in integrator 16 and manipulation in block 17, a control signal δ is applied to control input 11 to control the rate to allow it to correspond with the resonance frequency of the transducer means 6.

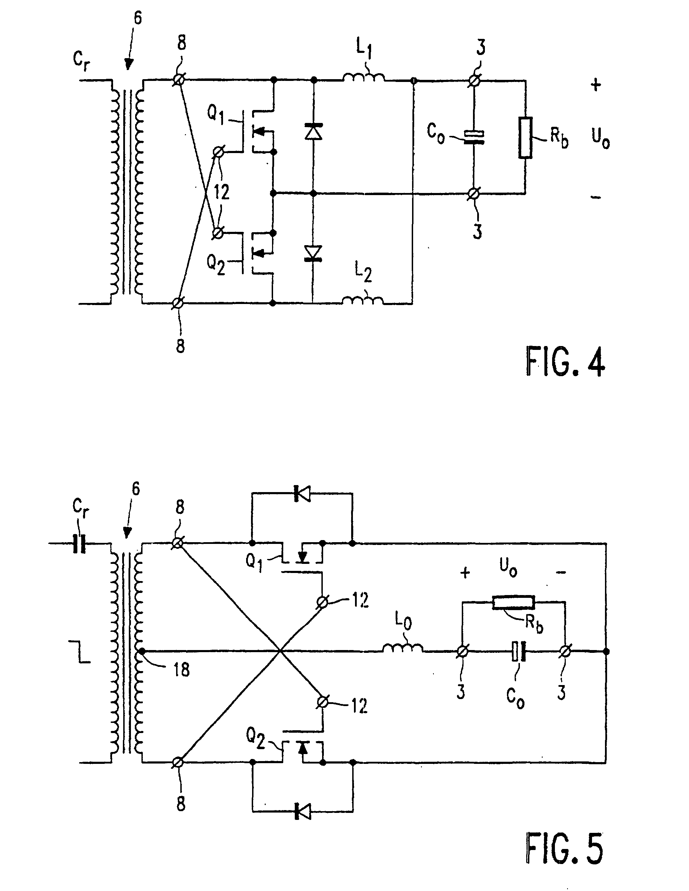

Dependent on, for example, the requirements imposed by the type of load 13, several embodiments of the output rectifier circuit 9 can be realised. Figs. 4, 5, 6 and 7, as well as 9, 10 and 11 show examples thereof.

The embodiment of fig. 4 shows a self-driven current doubler configuration of Q1 and Q2. In this example, input/output 12 is crosswise connected to transducer output 8 to be self-driven. Again, either Q1 or Q2 block the RF frequency pulses to the smoothing coils L1 and L2.

Another embodiment of the output rectifier circuit 9, wherein the resonant transducer means 6 has a central shunt or tap 18 is shown in figure 5. The central shunt 18 is connected to just one coil Lo. The circuit 9 now functions as a self-driven full wave synchronous rectifier.

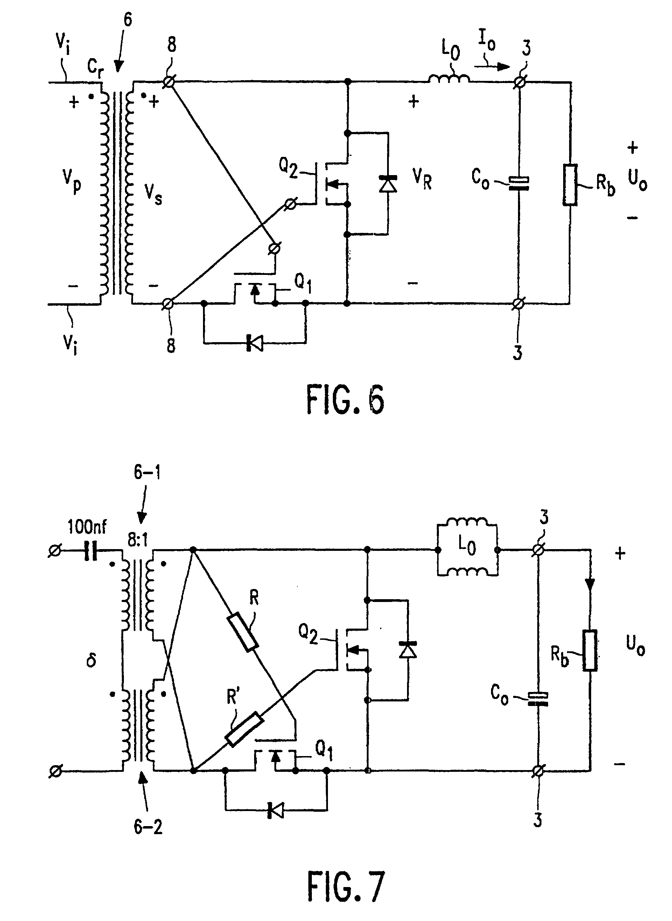

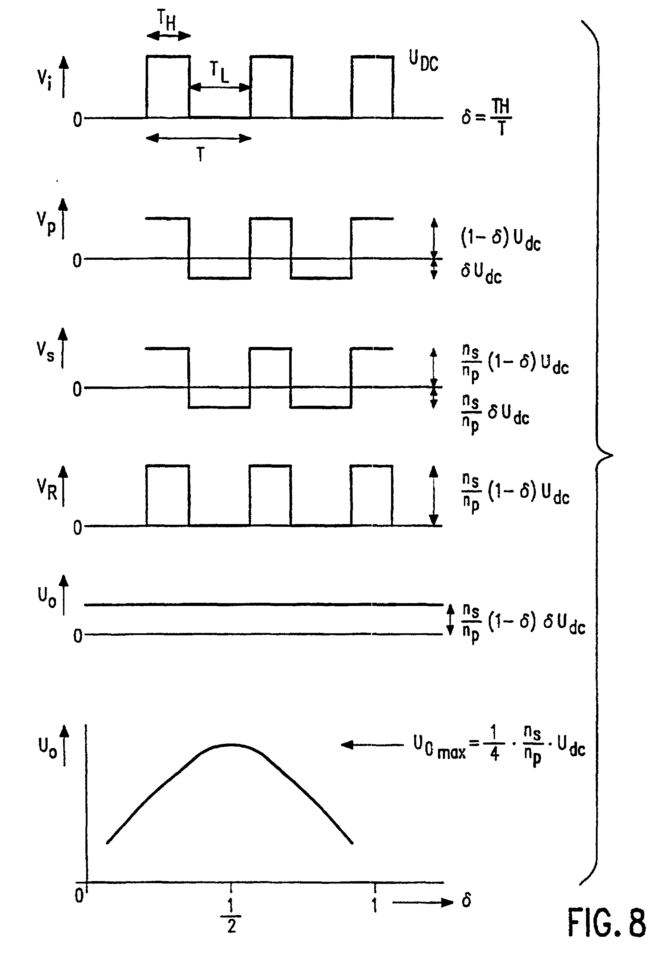

Self-driven half-wave synchronous rectifier circuits are also shown in figures 6 and 7. The embodiment of fig. 6 needs no central shunt, whereas in the embodiment of fig. 7, two separate resonant transducers 6-1 and 6-2 are used. The voltages in figure 6, denoted Vi, Vp, Vs, Vr, Uo and Udc (see fig. 3) are also shown in fig. 8 to illustrate, by way of example, the functioning of this embodiment of circuit 9. Assuming that nₚ : nₛ is the transducer transformation ratio and δ = T_{H} : T, then the calculated values of the upper and lower peak values of the denoted voltages are as indicated in Fig. 8. For δ = 1/2, the DC load voltage Uo reaches it maximum value of (nₛ/4*nₚ) Udc.

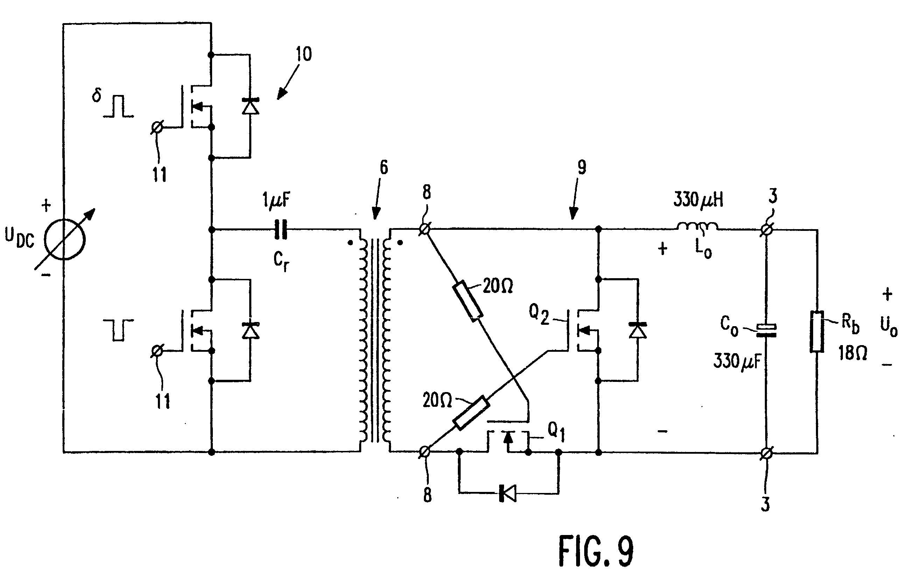

Figure 9 shows an embodiment which has a very small number of separate components realising a very efficient voltage transformation in miniature planar technology as described above, the transformation ratio being 4:1.

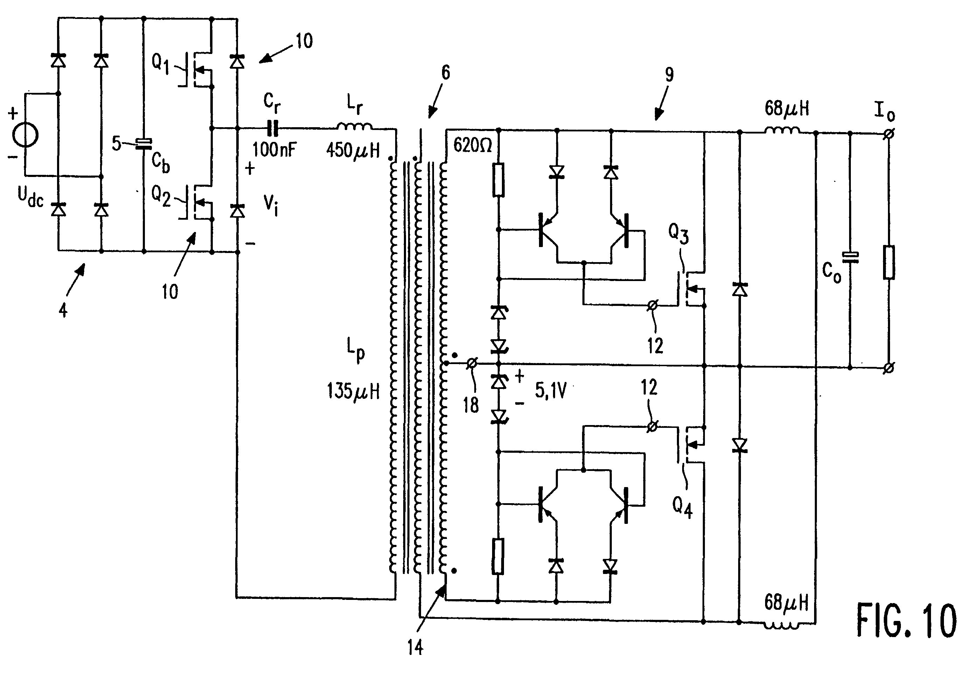

Still further self-driven embodiments, in particular, of the output rectifier circuit 9 are outlined in figures 10 and 11. For accurate control of the input/output 12 of the rectifier circuit 9, these resonant transducer means 6 are each provided with an additional transducer coupling 14 with central tap 18, or with separate additional couplings 14-1 and 14-2 for self-driving the active rectifier circuits 9 in a way described hereinabove.

## Claims

1. Convertor (1) having an input (2) and a load output (3), the convertor (1) comprising a resonant transducer means (6) provided with a transducer input (7) and a transducer output (8) coupled to the load output (3), an output rectifier circuit (9) coupled to the load output (3), and a controllable transducer control means (10) coupled between the input (2) of the convertor (1) and the transducer input (7), the transducer control means (10) being provided with a control input (11) coupled to the resonant transducer means (6) for inputting a control signal containing a measure of the resonance frequency of the resonant transducer means (6), **characterised in that** the output rectifier circuit (9) comprises one or more current doublers (Q3, Q4) having a control output (12) coupled to the control input (11) of the transducer control means (10).

2. Convertor (1) according to claim 1, **characterised in that** the convertor (1) comprises an LC circuit (Lr, Cr) coupled between the transducer control means (10) and the resonant transducer means (6).

3. Convertor (1) according to claim 1 or 2, **characterised in that** the resonant transducer means (6) is embodied as a resonant miniature transformer means.

4. Convertor (1) according to claim 1, 2, or 3, **characterised in that** the resonant transducer means (6) is a planar resonant transducer means.

5. Convertor (1) according to claim 1, 2, or 3, **characterised in that** the resonant transducer means (6) is a piezo-electric resonant transducer means.

6. Convertor (1) according to any one of the preceding claims, **characterised in that** the convertor (1) comprises a loop filter (15) connected between the control output (12) of the output rectifier circuit (9) and the control input (11) of the transducer control means (10).

7. Convertor (1) according to any one of the preceding claims, **characterised in that** the at least one current doubler (Q3, Q4) is embodied as a self-driven current doubler.

8. Convertor (1) according to one of the preceding claims, **characterised in that** the output rectifier circuit (9) is embodied as a synchronous rectifier.

9. Convertor (1) according to claim 8, **characterised in that** the synchronous rectifier is a half-wave or full-wave rectifier.

10. Power supply comprising a convertor (1) according to claim 1.

11. Battery charger comprising a convertor (1) according to claim 1.

## Patentansprüche

1. Wandler (1) mit einem Eingang (2) und einem Lastausgang (3), wobei der Wandler (1) ein schwingendes Transducermittel (6) aufweist, das mit einem Transducereingang (7) und einem Transducerausgang (8) versehen ist, der mit dem Lastausgang (3) gekoppelt ist, wobei eine Ausgangsgleichrichterschaltung (9) mit dem Lastausgang (3) gekoppelt ist, und ein steuerbares Transducersteuermittel (10), das zwischen dem Eingang (2) des Wandlers (1) und dem Transducereingang (7) vorgesehen ist, wobei das Transducersteuermittel (10) mit einem Steuereingang (11) versehen ist, der mit dem schwingenden Transducermittel (6) gekoppelt ist zum Eingeben eines Steuersignals, das ein Maß der Resonanzfrequenz des schwingenden Transducermittels (6) enthält, **dadurch gekennzeichnet, dass** die Ausgangsgleichrichterschaltung (9) eine oder mehrere Stromverdopplerschaltungen (Q3, Q4) aufweist, deren Steuerausgang (12) mit dem Steuereingang (11) des Transducersteuermittels (10) gekoppelt ist.

2. Wandler (1) nach Anspruch 1, **dadurch gekennzeichnet, dass** der Wandler (1) einen LC-Kreis (Lr, Cr) aufweist, der zwischen dem Transducersteuermittel (10) und dem schwingenden Transducermittel (6) vorgesehen ist.

3. Wandler (1) nach Anspruch 1 oder 2, **dadurch gekennzeichnet, dass** das schwingende Transducermittel (6) als schwingendes Miniatur-Transformationsmittel ausgebildet ist.

4. Wandler (1) nach Anspruch 1, 2 oder 3, **dadurch gekennzeichnet, dass** das schwingende Transducermittel (6) ein planares schwingendes Transducermittel ist.

5. Wandler (1) nach Anspruch 1, 2 oder 3, **dadurch gekennzeichnet, dass** das schwingende Transducermittel (6) ein piezoelektrisches schwingendes Transducermittel ist.

6. Wandler (1) nach einem der vorstehenden Ansprüche, **dadurch gekennzeichnet, dass** der Wandler (1) ein Schleifenfilter (15) aufweist, das zwischen dem Steuerausgang (12) der Ausgangsgleichrichterschaltung (9) und dem Steuereingang (11) des Transducermittels (10) vorgesehen ist.

7. Wandler (1) nach einem der vorstehenden Ansprüche, **dadurch gekennzeichnet, dass** der wenigstens eine Stromverdoppler (Q3, Q4) als selbst betriebener Stromverdoppler ausgebildet ist.

8. Wandler (1) nach einem der vorstehenden Ansprüche, **dadurch gekennzeichnet, dass** die Ausgangsgleichrichterschaltung (9) als synchroner Gleichrichter ausgebildet ist.

9. Wandler (1) nach Anspruch 8, **dadurch gekennzeichnet, dass** der synchrone Gleichrichter ein Einweg- oder ein Zweiweggleichrichter ist.

10. Netzteil mit einem Wandler (1) nach Anspruch 1.

11. Batterieladegerät mit einem Wandler (1) nach Anspruch 1.

## Revendications

1. Convertisseur (1) ayant une entrée (2) et une sortie de charge (3), le convertisseur (1) comportant un moyen de transducteur de résonance (6) qui est pourvu d'une entrée de transducteur (7) et d'une sortie de transducteur (8) étant couplée à la sortie de charge (3), un circuit redresseur de sortie (9) étant couplé à la sortie de charge (3) et un moyen de commande de transducteur commandable (10) étant couplé entre l'entrée (2) du convertisseur (1) et l'entrée de transducteur (7), le moyen de commande de transducteur (10) étant pourvu d'une entrée de commande (11) qui est couplée au moyen de transducteur de résonance (6) pour introduire un signal de commande contenant une mesure de la fréquence de résonance du moyen de transducteur de résonance (6), **caractérisé en ce que** le circuit redresseur de sortie (9) comporte un ou plusieurs doubleurs de courant (Q3, Q4) ayant une sortie de commande (12) qui est couplée à l'entrée de commande (11) du moyen de commande de transducteur (10).

2. Convertisseur (1) selon la revendication 1, **caractérisé en ce que** le convertisseur (1) comporte un circuit LC (Lr, Cr) qui est couplé entre le moyen de commande de transducteur (10) et le moyen de transducteur de résonance (6).

3. Convertisseur (1) selon la revendication 1 ou 2, **caractérisé en ce que** le moyen de transducteur de résonance (6) est réalisé comme un moyen de transformateur en miniature de résonance.

4. Convertisseur (1) selon la revendication 1, 2 ou 3, **caractérisé en ce que** le moyen de transducteur de résonance (6) est un moyen de transducteur de résonance planar.

5. Convertisseur (1) selon la revendication 1, 2 ou 3, **caractérisé en ce que** le moyen de transducteur de résonance (6) est un moyen de transducteur de résonance piézoélectrique.

6. Convertisseur (1) selon l'une quelconque des revendications précédentes 1 à 5, **caractérisé en ce que** le convertisseur (1) comporte un filtre bouclé (15) qui est connecté entre la sortie de commande (12) du circuit redresseur de sortie (9) et l'entrée de commande (11) du moyen de commande de transducteur (10).

7. Convertisseur (1) selon l'une quelconque des revendications précédentes 1 à 6, **caractérisé en ce que** le au moins un doubleur de courant (Q3, Q4) est réalisé comme un doubleur de courant auto-excité.

8. Convertisseur (1) selon l'une quelconque des revendications précédentes 1 à 7, **caractérisé en ce que** le circuit redresseur de sortie (9) est réalisé comme un redresseur synchrone.

9. Convertisseur (1) selon la revendication 8, **caractérisé en ce que** le redresseur synchrone est un redresseur demi-onde ou pleine onde.

10. Alimentation comportant un convertisseur (1) selon la revendication 1.

11. Chargeur de batterie comportant un convertisseur (1) selon la revendication 1.
